# EUROPÄISCHE PATENTSCHRIFT

(11) **EP 0 733 232 B1**
(45) Veröffentlichungstag und Bekanntmachung des Hinweises auf die Patenterteilung: **30.09.1998**
(21) Anmeldenummer: 94916200.2
(22) Anmeldetag: 06.05.1994
(51) Int. Cl.: G05D 7/06, G01F 15/00

(54) **EINRICHTUNG ZUM DOSIEREN VON FLUIDEN SOWIE GETRÄNKEAUSSCHANKANLAGE MIT EINER SOLCHEN DOSIEREINRICHTUNG**
FLUID DOSING ARRANGEMENT AND BEVERAGE DISPENSING SYSTEM PROVIDED WITH SUCH A DOSING ARRANGEMENT
DISPOSITIF DE DOSAGE DE FLUIDES ET INSTALLATION DE DISTRIBUTION DE BOISSONS EQUIPEE D'UN TEL DISPOSITIF DE DOSAGE

(30) Priorität: 09.12.1993 DE 4342096
(43) Veröffentlichungstag der Anmeldung: 25.09.1996
(73) Patentinhaber: Kobold, Klaus Josef, 1060 St. Gillis-Bruxelles (BE)
(72) Erfinder: Kobold, Klaus Josef, 1060 St. Gillis-Bruxelles (BE)
(74) Vertreter: KEIL & SCHAAFHAUSEN Patentanwälte
(86) Internationale Anmeldenummer: EP9401436
(87) Internationale Veröffentlichungsnummer: WO9516229

(56) Entgegenhaltungen:
- EP-A- 0 385 501
- FR-A- 2 685 475
- GB-A- 2 222 264
- GB-A- 2 262 934
- GB-A- 2 265 357
- US-A- 4 134 423
- US-A- 4 199 003
- US-A- 5 086 806
- PATENT ABSTRACTS OF JAPAN vol. 9, no. 9 (P-327) 16. Januar 1985 & JP,A,59 159 019 (NAKAMURA KINZOKU KOGYOSHO) 8. September 1984

## Beschreibung

Die Erfindung bezieht sich auf eine Einrichtung zum Dosieren von Fluiden nach dem Oberbegriff des Anspruchs 1.

Aus der US-A-5 086 806 ist ein Gerät zum selbsttätigen Abschalten der Förderung eines Fluids bekannt, sobald eine vorbestimmte Fluidmenge oder ein vorbestimmtes Zeitintervall überschritten werden. Hierzu ist ein Durchflußmengenmesser vorgesehen, welcher in Abhängigkeit von der Durchflußmenge ein Signal abgibt, wobei dieses Signal mit einem vorbestimmten Signal verglichen und bei Übereinstimmen ein Schaltventil in der Fluidleitung vor dem Durchflußmengenmesser geschlossen wird. Es kann auch ein zusätzlicher Zeitgeber vorgesehen sein, welcher nach Ablauf eines einstellbaren oberen Zeitintervalls ebenfalls ein Schließen des Ventils auslöst.

Andere, z.B. aus der US-A-3 386 620 bekannte Dosiereinrichtungen haben nur eine geringe Dosiergenauigkeit. Insbesondere beim Dosieren von Getränken z.B. im Ausschankbetrieb sind höhere Dosiergenauigkeiten erforderlich. Herkömmliche Durchflußmesser, wie Flügelrad-, Turbinen- oder dgl. auf Rotation beruhende Durchflußmesser, wie sie im Zusammenhang mit der vorliegenden Erfindung bevorzugt eingesetzt werden sollen, besitzen typische, physikalisch bedingte Eigenschaften, welche zu herstellungs- und betriebsbedingten Ungenauigkeiten der Dosierung führen. Die Ungenauigkeiten sind in der Regel abhängig von der Beschaffenheit des Durchflußmessers selbst, den Eigenschaften des zu dosierenden Fluids sowie den Betriebsbedingungen. Sie sind u.a. zurückzuführen auf Reibung, Massenträgheit, Viskosität, Strömungsführung, Strömungsgeschwindigkeit, Turbulenzen und dgl. mehr. Zu den systembedingten Meßfehlern addiert sich ein durch die Fertigungstoleranzen bedingter Fehler in der Größenordnung von etwa +5%.

Aufgabe der Erfindung ist es, eine Dosiereinrichtung der gattungsgemäßen Art vorzuschlagen, mit welcher höhere Dosiergenauigkeiten erzielt werden können.

Diese Aufgabe wird bei einer gattungsgemäßen Dosiereinrichtung mit den Merkmalen des Anspruchs 1 gelöst.

Mit der Erfindung wird erreicht, daß das Schaltventil nur geöffnet ist, wenn der Durchflußmesser in einem vorgegebenen Durchflußgeschwindigkeitsbereich arbeitet. Durch Festlegung des unteren Wertes und des oberen Wertes kann dieser Durchflußgeschwindigkeitsbereich so bestimmt werden, daß in einem Bereich der Fehlerkurve gearbeitet wird, in welchem diese nur geringste Abweichungen vom Wert 0 hat. Fällt die Durchflußgeschwindigkeit dagegen unter einen vorgegebenen Minimalwert oder übersteigt sie einen vorgegebenen Maximalwert, wird das Schaltventil selbsttätig geschlossen. Dies bedeutet, daß eine Fluidabgabe in Bereichen der Durchflußgeschwindigkeit wegen Schließens des Schaltventils nicht erfolgen, in welchen der Dosierfehler zu groß würde. Auf diese Weise kann der betriebsbedingte Dosierfehler um ein Vielfaches gegenüber herkömmlichen Dosiereinrichtungen gesenkt werden. Mit der erfindungsgemäßen Lösung wird u.a. auch gewährleistet, daß z.B. bei Schaumbildung, Gas- oder Luftblasenbildung, Defekt des Durchflußmessers oder dgl. der Dosiervorgang abgebrochen wird, da dann das die Durchflußgeschwindigkeit repräsentierende Sensorsignal unter den vorgegebenen unteren Wert fällt und das Schaltventil zur Vermeidung einer weiteren Abgabe des zu dosierenden Fluids sofort geschlossen wird. Der Dosiervorgang wird beispielsweise auch abgebrochen, wenn die Leitung zwischen Durchflußmesser und Auswerteschaltung unterbrochen wird, da auch dann kein in den vorgegebenen Bereich fallendes Sensorsignal mehr in der Auswerteschaltung festgestellt werden kann. Auch bei Netzausfall, welcher die Genauigkeit der Dosierung beeinträchtigen könnte, wird der Betrieb unterbrochen. Die Verwendung von Flügelrad-, Turbinen- oder dgl. ein von dem strömenden Fluid in Drehung versetztes Element aufweisende Durchflußmessern ist deswegen im Rahmen der Erfindung von besonderem Interesse, weil an solchen Durchflußmessern ein Frequenzsignal als Sensorsignal abgegriffen werden kann, dessen Frequenz ein Maß für die Durchflußgeschwindigkeit des zu dosierenden Fluids ist und anhand der Frequenz einfach die Unterschreitung oder Überschreitung der erwähnten Grenzwerte für den Durchflußgeschwindigkeitsbereich festgestellt werden kann.

Abgesehen von dieser Ausschaltung bzw. Verringerung der betriebsbedingten Dosierfehler können systembedingte Dosierfehler bei einer weiteren Ausgestaltung der Erfindung dadurch ausgeschaltet werden, daß der Auswerteschaltung zur Durchflußkalibrierung der jeweiligen Dosiereinrichtung ein Korrekturwerteinsteller zugeordnet ist. Mittels des Korrekturwerteinstellers kann sichergestellt werden, daß von der Auswerteschaltung, welche das von dem Durchflußmesser stammende Signal zur Bestimmung der gewünschten Durchflußmenge erfaßt und bei Erreichen der vorbestimmten Durchflußmenge ein Abschaltsignal an das Schaltventil abgibt, um dieses zu schließen, dieses Abschaltsignal möglichst genau zu dem Zeitpunkt abgegeben wird, zu dem die gewünschte Fluidmenge den Durchflußmesser passiert hat. Dies ist beispielsweise beim Ausschenken von Getränken von Bedeutung, weil auf diese Weise die Dosiergenauigkeit beim Ausschank der Getränkeflüssigkeit in ein Glas sehr genau festgelegt werden kann.

Mit der Erfindung wird ferner vorgeschlagen, daß der Auswerteschaltung ein Zählwerk für die Anzahl der Dosiervorgänge zugeordnet ist. Auf diese Weise kann beispielsweise bei einer Getränkeausschankanlage die Anzahl der Gläser gezählt werden, die ausgeschenkt worden sind.

Bei der erfindungsgemäßen Dosiereinrichtung ist ferner der Auswerteschaltung mit Vorteil eine Starttaste zugeordnet, bei dessen Betätigung die Freigabe des Fluiddurchflusses, d.h. das Öffnen des Schaltventils, ausgelöst wird. Durch Betätigen der Starttaste wird beispielsweise an die Auswerteschaltung ein elektrisches Signal geliefert und die Auswerteschaltung liefert ein Öffnungssignal an das Schaltventil. Dieses Öffnungssignal verschwindet dann wieder unter den oben genannten Bedingungen, beispielsweise wenn die gewünschte Fluidmenge abgegeben wurde oder die Durchflußgeschwindigkeit die vorgegebenen Grenzwerte unter- bzw. überschreitet.In jedem Fall wird also der Dosiervorgang bei zu kleiner Dosiergenauigkeit abgebrochen, oder wenn sonstige Störungen in dem Dosiersystem vorliegen.

Mit besonderem Vorteil setzt man die erfindungsgemäße Dosiereinrichtung bei Getränkeausschankanlagen ein, da bei diesen - ungeachtet der unterschiedlichen Viskositätseigenschaften der auszuschenkenden Flüssigkeiten - beispielsweise in Gaststätten oder dgl. hohe Dosiergenauigkeit verlangt wird. Bei Anwendung der Erfindung können in der Ausschankanlage sonst notwendige Komponenten entfallen, wie Schaumdetektor, Pumpensteuerung, Pumpendrucküberwachung und die zugehörige Elektronik.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale den Gegenstand der Erfindung auch unabhängig von ihrer Zusammenfassung in den Ansprüchen oder deren Rückbeziehung.

Es zeigen:
- Fig. 1: schematisch eine die Erfindung aufweisende Dosiereinrichtung, sowie
- Fig. 2: ein Fließschema für die in Fig. 1 dargestellte Dosiereinrichtung.

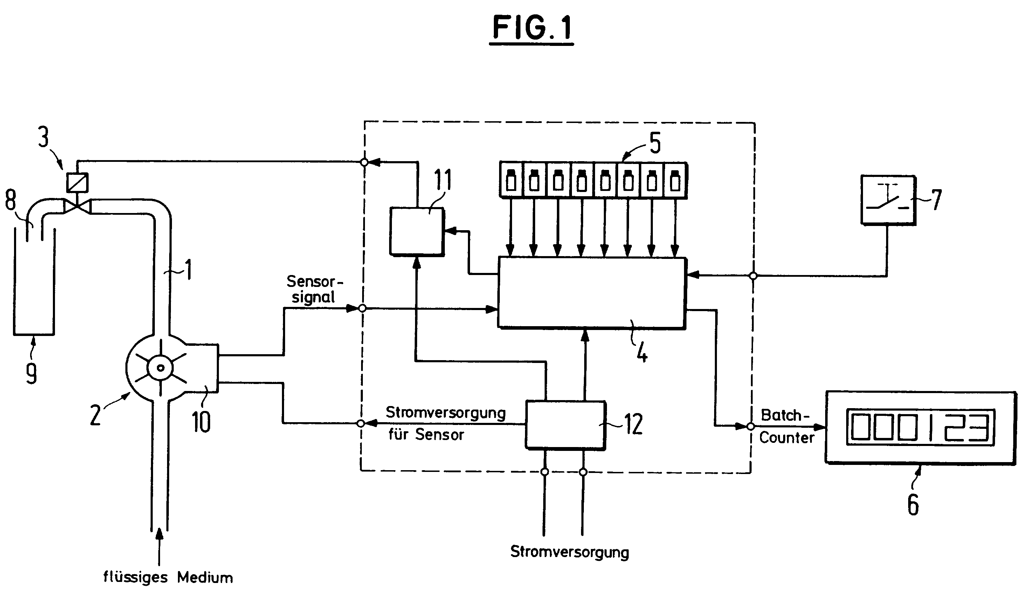

Die über einen AC-DC-Konverter 12 mit Strom versorgte Dosiereinrichtung für Fluide gemäß Fig. 1 weist einen in der Dosierleitung 1 angeordneten Durchflußmesser 2 auf, welcher in dem dargestellten Fall als Flügelrad-Durchflußmesser gezeichnet ist. Es kann aber auch jede andere Art von Durchflußmesser sein. Die Dosierleitung 1 mündet über ein beispielsweise als Magnetventil ausgebildetes Schaltventil 3 in einen Auslaß 8 zur Abgabe des Fluids, z.B. eines flüssigen Mediums, wie einer Getränkeflüssigkeit, in ein Gefäß 9, z.B. ein Bierglas.

Dem Durchflußmesser 2 ist ein Sensor 10 zugeordnet, mit Hilfe dessen die Durchflußgeschwindigkeit des Fluids gemessen werden kann. Der Sensor 10 gibt ein Sensorsignal ab, welches repräsentativ ist für die Durchflußgeschwindigkeit in dem Durchflußmesser 2. Im Falle eines Flügelraddurchflußmessers ist dies ein Frequenzsignal, wobei die Frequenz ein Maß für die Durchflußgeschwindigkeit ist. Der Sensor 10 kann beispielsweise elektrooptischer oder elektronmagnetischer Natur sein. In dem dargestellten Fall eines Flügelrad-Durchflußmessers muß er geeignet sein, die Umdrehungsfrequenz des Flügelrades festzustellen und ein entsprechendes Sensorsignal zu liefern.

Das Sensorsignal wird einer elektrischen Auswerteschaltung 4 zugeführt. Der elektrischen Auswerteschaltung 4 ist auch eine Starttaste 7 zugeordnet. Beim Drücken der Starttaste 7 wird von der Auswerteschaltung 4 - über einen Schaltverstärker 11 - ein Signal (Öffnungssignal) an das Schaltventil 3 abgegeben, welches dieses öffnet. Bei Zuführung des Fluids unter Druck strömt dieses demzufolge in der Dosierleitung 1 durch den Durchflußmesser 2 und das geöffnete Schaltventil 3 zu dem Auslaß 8 in das Gefäß 9. In vorgegebenem geringem zeitlichem Abstand von der Betätigung der Starttaste 7 wird von der Auswerteschaltung 4 überprüft, ob das Sensorsignal oberhalb eines unteren Grenzwertes für die Durchflußgeschwindigkeit des Fluids in dem Durchflußmesser 2 oder unterhalb eines oberen Grenzwertes für die Durchflußgeschwindigkeit des Fluides in dem Durchflußmesser 2 liegt. Unterschreitet das Sensorsignal den vorgegebenen unteren Grenzwert oder überschreitet das Sensorsignal den vorgegebenen oberen Grenzwert, liegt also im dargestellten Fall die Frequenz des Sensorsignals unterhalb einer vorgegebenen unteren Grenzfrequenz oder oberhalb einer vorgegebenen Grenzfrequenz, so wird das an dem Schaltventil 3 anstehende Öffnungssignal unterbrochen und das Schaltventil 3 schließt. Auf diese Weise wird sichergestellt, daß nur in einem vorgegebenen Durchflußgeschwindigkeitsbereich dosiert wird und Fehlerquellen, welche außerhalb dieses Bereiches betriebsbedingt auftreten können, ausgeschlossen werden.

Unabhängig von dieser Auswertung des Sensorsignals hinsichtlich der festgestellten Durchflußgeschwindigkeit wird das Sensorsignal selbstverständlich hinsichtlich der Durchflußmenge ausgewertet, d.h. im dargestellten Fall die Anzahl der Schwingungen des als Frequenzsignal anfallenden Sensorsignals gezählt und bei Erreichen eines vorgegebenen Wertes, welcher der zu dosierenden Fluidmenge entspricht, das an dem Schaltventil 3 anstehende Öffnungssignal von der Auswerteschaltung 4 unterbrochen.

Um die Dosiergenauigkeit unter Ausschaltung systembedingter, d.h. dosiereinrichtungsbedingter Fehler, zu erhöhen, ist der Auswerteschaltung 4 ferner ein Korrekturwerteinsteller 5 mit einer Anzahl von Dippschaltern zugeordnet. Jede Dosiereinrichtung wird unter Verwendung dieser Korrekturwerteinstellung 5 auf die abzugebende Fluidmenge genau kalibriert. Dadurch wird sichergestellt, daß beispielsweise ein Getränkeglas genau bis zu dem vorgeschriebenen Eichstrich gefüllt wird und in diesem Moment das Schaltventil 3 durch Abschalten des von der Auswerteschaltung 4 anstehenden Öffnungssignals geschlossen wird.

Der Auswerteschaltung 4 ist ferner ein Zählwerk 6 zugeordnet, an dem beispielsweise die Zahl derjenigen Getränkegläser abgelesen werden kann, welche in einem vorgegebenen Zeitraum ausgeschenkt wurde.

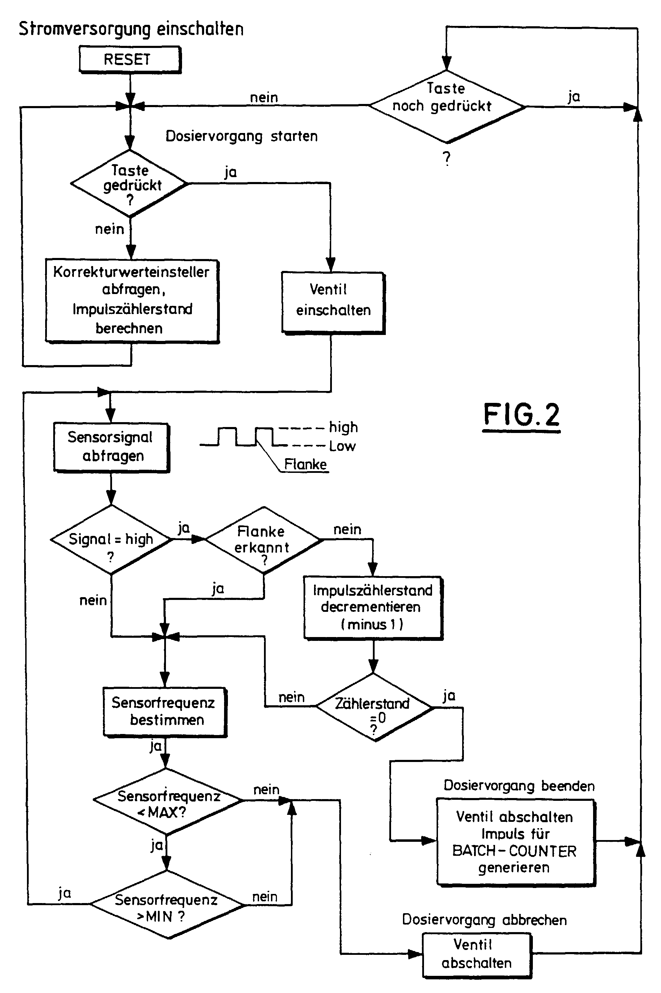

Die elektrische Verknüpfung von Durchflußmesser 2, Schaltventil 3, Auswerteschaltung 4, Korrekturwerteinsteller 5, Zählwerk 6, Starttaste 7 und Sensor 10 ergibt sich anschaulich aus Fig. 2.

### Bezugszeichenliste:

- 1: Dosierleitung
- 2: Durchflußmesser
- 3: Schaltventil
- 4: Auswerteschaltung
- 5: Korrekturwerteinsteller
- 6: Zählwerk
- 7: Starttaste
- 8: Auslaß
- 9: Gefäß
- 10: Sensor
- 11: Schaltverstärker
- 12: AC-DC-Konverter

## Patentansprüche

1. Einrichtung zum Dosieren von Fluiden, insbesondere von flüssigen Medien, wie Getränken, mit einem in der das zu dosierende Fluid führenden Dosierleitung (1) angeordneten Durchflußmesser (2), insbesondere Flügelrad-Durchflußmesser, mit einem in der Dosierleitung (1) angeordneten, vorzugsweise elektrisch betätigbaren Schaltventil (3) für die Freigabe oder Abschaltung des Fluiddurchflusses, sowie mit einer vorzugsweise elektrischen Auswerteschaltung (4) zur Abgabe eines Abschaltsignals an das Schaltventil (3), wenn eine vorbestimmte Durchflußmenge den Durchflußmesser (2) passiert hat, **dadurch gekennzeichnet**, daß dem Durchflußmesser (2) ein Sensor (10) zugeordnet ist, welcher die, z.B. durch die Umdrehungsfrequenz des Flügelrades gegebene, Durchflußgeschwindigkeit abtastet und der Auswerteschaltung (4) ein der Durchflußgeschwindigkeit entsprechendes, vorzugsweise elektrisches Sensorsignal übermittelt, und daß die Auswerteschaltung (4) an das dem Durchflußmesser (2) in Strömungsrichtung nachgeordnete Schaltventil (3) ein vorzugsweise elektrisches Abschaltsignal liefert, wenn das Sensorsignal einen vorgegebenen unteren Wert unterschreitet oder einen vorgegebenen oberen Wert überschreitet.

2. Einrichtung nach Anspruch 1, **dadurch gekennzeichnet**, daß der Auswerteschaltung (4) zur Durchflußmengenkalibrierung ein Korrekturwerteinsteller (5) zugeordnet ist.

3. Einrichtung nach Anspruch 1 oder 2, **dadurch gekennzeichnet**, daß der Auswerteschaltung (4) ein Zählwerk (6) für die Anzahl der Dosiervorgänge zugeordnet ist.

4. Einrichtung nach einem der Ansprüche 1 bis 3, **dadurch gekennzeichnet**, daß der Auswerteschaltung (4) eine Starttaste (7) zugeordnet ist, bei dessen Betätigung die Freigabe des Fluiddurchflusses, d.h. das Öffnen des Schaltventils (3), ausgelöst wird.

5. Die Verwendung einer Dosiereinrichtung nach einem der Ansprüche 1 bis 4 für eine Ausschankanlage für Getränke.

## Claims

1. Device for dosing of fluids, in particular liquid media such as beverages, with a flow meter (2) in particular an impeller flow meter arranged in the dosage line (1) carrying the fluid to be dosed, with an on-off valve (3) arranged in the metering line (1) and preferably controlled electrically to release or shut off the fluid flow, and with a preferably electrical analysis circuit (4) to emit a shut-off signal to the on-off valve (3) when a predetermined flow quantity has passed the flow meter (2), characterised in that allocated to the flow meter (2) is a sensor (10) which scans the flow speed given for example by the rotation frequency of the impeller wheel and transmits to the analysis circuit (4) a preferably electrical sensor signal corresponding to the flow speed, and that the analysis circuit (4) supplies to the on-off valve (3), arranged downstream of the flow meter (2) in the direction of flow, a preferably electrical shut-off signal when the sensor signal falls below a specified lower value or exceeds a specified higher value.

2. Device according to claim 1, characterised in that a correction value setting unit (5) is allocated to the analysis circuit (4) to calibrate the flow quantity.

3. Device according to claim 1 or 2, characterised in that a counter (6) for the number of dosing procedures is allocated to the analysis circuit (4).

4. Device according to claim 1 to 3, characterised in that a start button (7) is allocated to the analysis circuit (4), operation of which triggers the release of the fluid flow i.e. by opening the on-off valve (3).

5. Use of a dosing device according to any of claims 1 to 4 for a beverage dispensing system.

## Revendications

1. Dispositif de dosage de fluides, notamment de substances liquides telles que des boissons, comprenant un débitmètre (2) disposé dans la conduite de dosage (1) amenant le fluide à doser, notamment un débitmètre à roue à ailettes, une soupape de commande (3) placée dans la conduite de dosage (1) et pouvant être actionnée de préférence électriquement pour libérer ou interrompre l'écoulement du fluide, ainsi qu'un circuit d'interprétation de préférence électrique (4) pour délivrer à la soupape de commande (3) un signal d'interruption lorsqu'une quantité prédéfinie de produit a traversé le débitmètre (2), caractérisé en ce qu'un capteur (10) est associé au débitmètre (2), qui enregistre la vitesse d'écoulement du fluide donnée, par exemple, par la fréquence de rotation de la roue à ailettes, et qui transmet au circuit d'interprétation (4) un signal de capteur de préférence électrique correspondant à la vitesse d'écoulement, et en ce que le circuit d'interprétation (4) fournit à la soupape de commande (3) placée en aval du débitmètre (2) par rapport au sens d'écoulement un signal d'interruption de préférence électrique lorsque le signal du capteur passe sous une valeur seuil inférieure prédéfinie ou dépasse une valeur seuil supérieure prédéfinie.

2. Dispositif selon la revendication 1, caractérisé en ce qu'un dispositif correcteur (5) est associé au circuit d'interprétation (4) pour calibrer le débit.

3. Dispositif selon la revendication 1 ou 2, caractérisé en ce qu'un compteur (6) est associé au circuit d'interprétation (4) pour totaliser le nombre des processus de dosage.

4. Dispositif selon l'une des revendications 1 à 3, caractérisé en ce qu'une touche de mise en marche (7) est associée au circuit d'interprétation (4), qui, lorsqu'elle est actionnée, libère l'écoulement du fluide, c'est-à-dire ouvre la soupape de commande (3).

5. Mise en oeuvre d'un dispositif de dosage selon l'une des revendications 1 à 4 dans un distributeur de boissons.
